# EUROPEAN PATENT APPLICATION

(11) **EP 3 838 024 A1**
(43) Date of publication of application: **23.06.2021**
(21) Application number: 19218494.3
(22) Date of filing: 20.12.2019
(51) Int. Cl.: A24F 40/53, A24F 40/65, A61M 11/04, H04W 4/02

(54) **A SYSTEM AND METHOD FOR MANAGING A SMOKING SUBSTITUTE DEVICE**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

A smoking substitute device is configured to switch between a fist operating mode and a second operating mode based on a location of the smoking substitute device. Here, a first function of the smoking substitute device is enabled and disabled when switching between the first mode and the second mode. A locator device determines a location of the smoking substitute device and a control unit controls the smoking substitute device to be operable in the first mode or the second mode based on an identified location. Consequently, the same smoking substitute device can be automatically configured to operate with a functionality complying with the specific jurisdiction. For instance, in the second jurisdiction use of the smoking substitute device to create an aerosol may not be allowed, or the lower age limit for using the smoking substitute device in the second jurisdiction may be higher than the first jurisdiction, or the second jurisdiction may not authorise the use of a certain type of consumable, or the second jurisdiction may prevent the collection of user data, or the second jurisdiction may not authorise another functionality of the smoking substitute device. Advantageously, by enabling and disabling a function of the smoking substitute device based on a location of the smoking substitute device, the same device can be controlled to operate according to varying rules or regulations in both a first location and a second location.

## Description

### TECHNICAL FIELD

The present invention relates to a smoking substitute device and particularly, although not exclusively, to the management of functionality on the smoking substitute device.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products. Some smoking substitute systems use smoking substitute articles (also referred to as a "consumables") that are designed to resemble a traditional cigarette and are cylindrical in form with a mouthpiece at one end.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO™ e-cigarette. The blu PRO™ e-cigarette is an open system device which includes a main body, a (refillable) tank, and a mouthpiece. The main body and tank are physically and electrically coupled together by screwing one to the other. The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

An example of the HT approach is the IQOS™ smoking substitute device from Philip Morris Ltd. The IQOS™ smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HT approach is the device known as "Glo"™ from British American Tobacco p.l.c. Glo™ comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

If the smoking substitute device does not operate in isolation to other devices, it would be advantageous to provide a manufacturer of the device the ability to produce a single device that is useable in multiple locations that may have different regulations, rules or preferences for the operating functionality of the smoking substitute device.

The present invention has been devised in light of the above considerations.

### Summary of the Invention

According to exemplary aspects, a smoking substitute device is configured to switch between a fist operating mode and a second operating mode based on a location of the smoking substitute device. Here, a first function of the smoking substitute device is enabled and disabled when switching between the first mode and the second mode. Advantageously, by enabling and disabling a function of the smoking substitute device based on a location of the smoking substitute device, the same device can be controlled to operate according to varying rules or regulations in both a first location and a second location.

At their most general, the exemplary aspects provide a smoking substitute device wherein a locator device determines a location of the smoking substitute device and a control unit is configured to operate the smoking substitute device in the first mode or the second mode based on an identified location. For instance, if the location is determined to be a first jurisdiction, the smoking substitute device is controlled to be operable in a first mode according to the requirements of the first jurisdiction. If the smoking substitute device subsequently moves to a second location and the second location is determined to be a second jurisdiction, the smoking substitute device is configured to automatically switch to the second mode to comply with a change in the requirements between the first jurisdiction and the second jurisdiction. That is, at least a first function is enabled or disabled as the smoking substitute device moves between a first location and a second location. Consequently, the same smoking substitute device can be automatically configured to operate with a functionality complying with the specific jurisdiction. For instance, in the second jurisdiction use of the smoking substitute device to create an aerosol may not be allowed, or the lower age limit for using the smoking substitute device in the second jurisdiction may be higher than the first jurisdiction, or the second jurisdiction may not authorise the use of a certain type of consumable, or the second jurisdiction may prevent the collection of user data, or the second jurisdiction may not authorise another functionality of the smoking substitute device.

There is therefore provided, according to a first exemplary aspect, a smoking substitute device including a control unit and a locator device.

In the exemplary embodiments, the control unit controls the smoking substitute device to operate in a first mode and a second mode. In the first mode, the control unit controls the smoking substitute device to be operable with a first function enabled. In the second mode, the control unit controls the smoking substitute device to be operable with the first function disabled.

In the exemplary embodiments, the locator device determines the location of the smoking substitute device. Suitably the locator device includes a locator. The locator is configured to determine a location of the locator as is known in the art. The locator device may comprise a lookup unit. Here, the lookup unit queries a database to determine which mode the determined location supports. For instance, based on the location of the smoking substitute device whether the device should be controlled to operate in the first mode or the second mode. Advantageously, by looking up the functionality in a database allows the database to be updated to reflect changes in rules or regulations. The locator device's function may be entirely completed by components of the smoking substitute device. Alternatively, some or all of the locator device's function may be completed by components which are not part of the smoking substitute device, for instance by components of a connected external device. In the example wherein the locator and lookup unit are comprised externally to the smoking substitute device, the locator device of the smoking substitute device may comprise the control unit using information received from the external device to determine which mode to operate in. Thus in its most general form, the locator device has a function of determining whether the control unit should operate in a first mode or a second mode based on a determined location of the smoking substitute device.

In one exemplary embodiment, the smoking substitute device includes a wireless communication interface configured to transmit and receive data and commands from an external device. Suitably, the external device may be a smartphone, tablet, smartwatch or other suitable device. The control unit may complete a pairing operation to pair the smoking substitute device and external device or to otherwise verify the external device as a trusted external device that the smoking substitute device is authorised to receive transmissions from. Typically, the external device suitably operates an application to control the communication with the smoking substitute device and to display the information to the user.

It will be appreciated that in the exemplary embodiments, the wireless communication interface is configured to wirelessly communicate with an external device. Specifically, the wireless communication interface is arranged to establish a wireless communication link with the external device. In one exemplary embodiment, the locator device comprises a part of the external device. Here, the locator device determines the location of the external device as is known in the art, and the location of the smoking substitute device is determined to be the location of the external device. Suitably, the wireless communication link is therefore a short distance wireless link such that the smoking substitute device is constrained to be nearby to share a location with the external device. In exemplary embodiments, the external device includes a lookup unit and the lookup unit determines whether the determined location supports the first mode of operation or the second mode of operation. For instance, the lookup unit queries a database based on the determined location and reads a mode associated with the location. Here, suitably, the lookup unit is configured to send a mode command over the wireless link. On receiving the mode command at the wireless communication interface the control unit determines a mode to operate in based on the mode command and, where necessary, switches the smoking substitute device to operate in the respective mode.

In the exemplary embodiment, the smoking substitute device may periodically poll the external device for a mode command. Alternatively, the application may cause the lookup unit to query the database each time a location changes and pushes a mode command to the smoking substitute device when it is determined the location has moved to a jurisdiction supporting a different mode.

In one exemplary embodiment, the smoking substitute device is configured to enable and disable operation of the smoking substitute device to create an aerosol. Thus, the manufacturer of a smoking substitute device can control the device to automatically switch to a disabled mode when it is detected that the user has moved within a second jurisdiction where producing or inhaling an aerosol is not permitted, for instance to comply with a regulation of the second jurisdiction such as a state or country or to enforce a ban in a certain location, for instance around a specific geographical location such as a specific building (such as a school) or the like. In the exemplary embodiments wherein the first function that is enabled and disabled is an operating function of the smoking substitute device, suitably the smoking substitute device comprises an aerosol assembly for producing an aerosol and the function is an operating function of the aerosol assembly. Here, in the first mode, the aerosol assembly is enabled such that when a user completes a puff operation, the aerosol assembly produces an aerosol. When in the second mode, the aerosol assembly is disabled such that it is prevented from creating an aerosol, for instance, even if a user completes a puff operation.

In a further exemplary embodiment, the smoking substitute device is configured to enable and disable the use of a specific type of consumable. For instance, the first jurisdiction may allow the use of the smoking substitute device with both a first type and a second type of consumable whereas the second jurisdiction may only allow use of the smoking substitute device with the first type of consumable. For instance, the second consumable may be a flavoured consumable or may comprise a consumable with a higher nicotine level. Here, the substitute device includes a coupling portion and a consumable. For instance, the smoking substitute device comprises a body having the coupling portion and the consumable is able to be coupled thereto. The body further houses a reading device to read a detail of the consumable and to determine whether the consumable is a first type or a second type and to enable or disable an aerosol assembly according to an operation mode determined from the location of the smoking substitute device.

Preferably, the smoking substitute device includes a power source. The power source, for instance a battery, provides power to the components of the smoking substitute device. Suitably the battery and components are housed in a body of the smoking substitute device.

In the exemplary embodiments, the aerosol assembly is operable to produce an aerosol. Suitably, the control unit may prevent power from being supplied to the aerosol assembly component to disable the operation thereof. For instance, by preventing or controlling the power source from supplying power to the aerosol assembly. In one exemplary embodiment, the aerosol assembly includes a heating unit and the assembly is disabled by preventing power from being supplied to the heating unit. In an alternative or complimentary exemplary embodiment, the aerosol assembly includes a heating unit and a heating unit activator, wherein the heating unit is activated to heat a consumable via the heating unit activator. Here the control unit can disable the aerosol assembly component by preventing power from being supplied to the heating unit activator. A suitable heating unit activator may be a switch that is manually activated or alternatively an airflow sensor that detects airflow through the body and is activated by inhaling from the smoking substitute device. In a further exemplary embodiment wherein the aerosol assembly comprises a coupling portion, there may be provided an electrical interface for electrically coupling the consumable to the coupling portion. Here, the control unit disables the aerosol assembly by preventing power from being supplied to the electrical interface.

In a further exemplary embodiment, the smoking substitute device is configured to enable and disable operation of the smoking substitute device to create an aerosol and in accordance with other embodiments, wherein the first mode and second mode enable and disable the aerosol assembly also based on an age verification process. For instance, where a second region has a lower age at which a user can use the smoking substitute device as compared to the first region, the smoking substitute device is configured to be operable in the first region if the user is verified as being older than the age limit but to automatically disable operation when the smoking device is moved to the second region and the user is not also older than the second, higher age limit.

In a further exemplary embodiment, the smoking substitute device is configured to enable and disable the storage of user data. For instance, in a first mode, during operation of the smoking substitute device, the control unit is configured to store user data in a memory. The user data is generated during operation of the smoking substitute device. For instance, the user data may log and or record details of the battery voltage, inhale count, inhale duration, coil resistance, pressure, temperature, charging source and status, error count number of charges or any other information useful to the operation or performance of the smoking substitute device. Here a body may house a battery and an additional component may include circuitry for controlling and managing the battery and battery recharging. Further, the body may include a coupling portion arranged to receive a consumable. Here the consumable may include a heating device such as a coil and may include machine readable information regarding the type or other details of the consumable. Further, the body may house an airflow sensor for detecting airflow through the body, wherein the airflow sensor can be monitored to determine an inhale or puff occurrence as well as data concerning the inhale duration and inhale pressure and additional or alternative inhale parameters. Where it might be useful to control the storage of user data differently in a second jurisdiction, the second mode may comprise disabling the functionality of storing some or all of the user data, or for instance, storing the user data differently.

It will be appreciated that the exemplary embodiments may include third or subsequent operating modes. Here, for instance, the third operating mode may include a further operating function, for instance a third age limit and / or the operating modes may comprise a combination of the functionality, for instance an age limit on a type of consumable.

There is therefore provided, according to a further exemplary aspect, a method of managing a smoking substitute device wherein the method comprises the step of determining a location of the smoking substitute device, determining an operating mode of the smoking substitute device according to the determined location, and enabling and disabling a function of the smoking substitute device according to the determined operating mode.

In exemplary embodiments, the method may comprise using a locator to determine the location of the smoking substitute device.

In exemplary embodiments, the method may comprise using a lookup device to query a database to determine the operating mode based on a determined location.

In the exemplary embodiments, the method may comprise managing a system comprising a smoking substitute device and an external device wherein the method comprises forming a wireless link between the devices. Suitably, the external device includes a locator and the method comprises using the location of the external device as the location of the smoking substitute device. Suitably, the external device includes a lookup unit and the lookup unit determines the operating mode and causes a mode command to be transmitted over the wireless link to the smoking substitute device. Here, the control unit is configured to operate the smoking substitute device in the first mode or the second mode based on the received mode command.

According to further exemplary aspects there is provided a system including a smoking substitute device according to previous aspects and an external device connectable to the smoking substitute device. Yet further, according to another exemplary aspect, there is provided a computer implement method for managing a smoking substitute device to execute the previous method aspect or a computer-readable medium containing computer-readable instructions which, when executed by a processor, cause the processor to perform the precious method aspect.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Summary of the Figures

Embodiments and experiments illustrating the principles of the invention will now be discussed with reference to the accompanying figures in which:
**Figure 1** shows an example system for managing a smoking substitute device;
**Figure 2(a)** shows an example smoking substitute device for use as the smoking substitute device in the system of Fig. 1;
**Figure 2(b)** shows the main body of the smoking substitute device of Fig. 2(a) without the consumable;
**Figure 2(c)** shows the consumable of the smoking substitute device of Fig. 2(a) without the main body;
**Figure 3(a)** is a schematic view of the main body of the smoking substitute device of Fig. 2(a);
**Figure 3(b)** is a schematic view of the consumable of the smoking substitute device of Fig. 2(a);
**Figure 4** is an example schematic view of a system for setting an operating mode based on location of a smoking substitute device and according to an exemplary embodiment; and
**Figure 5** is a flow chart of a method to set an operating mode based on a location of a smoking substitute device and according to an exemplary embodiment.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

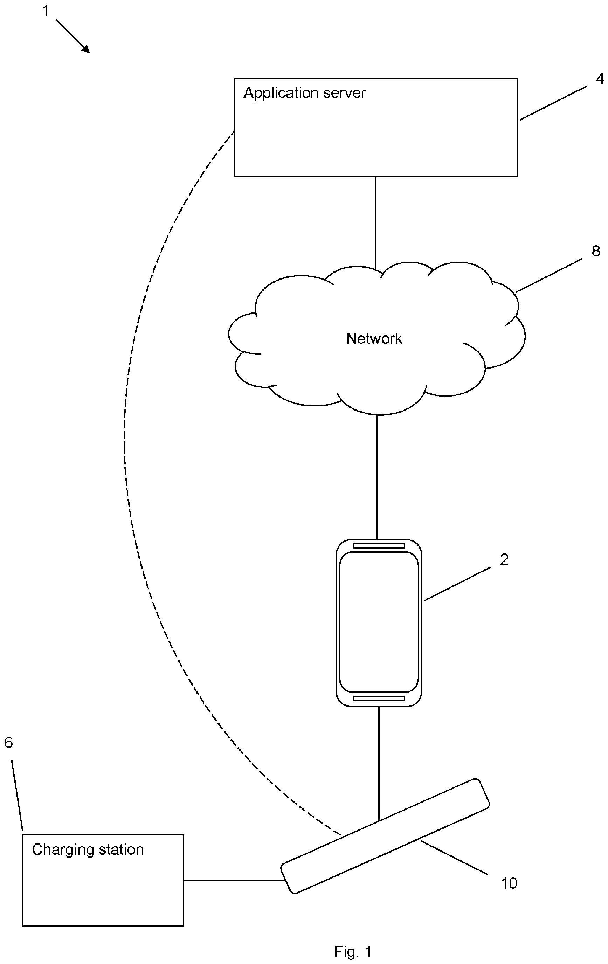

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth™, with an application (or "app") installed on the mobile device 2, e.g. via a suitable wireless interface (not shown) on the mobile device 2. The mobile device 2 may be a mobile phone, for example. The application on the mobile phone is configured to communicate with the application server 4, via a network 8. The application server 4 may utilise cloud storage, for example.

The network 8 may include a cellular network and/or the internet.

In other examples, the smoking substitute device 10 may be configured to communicate with the application server 4 via a connection that does not involve the mobile device 2, e.g. via a narrowband internet of things ("NB-loT") connection. In some examples, the mobile device 2 may be omitted from the system.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4. The app may run in the background to handle communication with the smoking substitute device.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

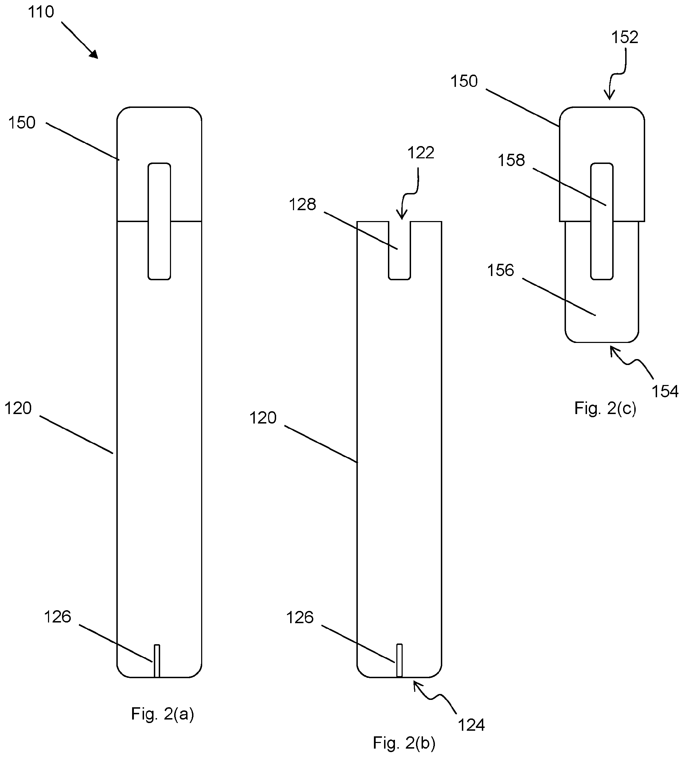

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120, e.g. with the consumable 150 being retained in the aperture via an interference fit. In other examples, the main body 120 and the consumable could be physically coupled together by screwing one onto the other, through a bayonet fitting, or through a snap engagement mechanism, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

In this present embodiment, the consumable 302 is a "single-use" consumable. That is, upon exhausting the e-liquid in the tank 156, the intention is that the user disposes of the whole consumable 150. In other embodiments, the e-liquid (i.e. aerosol former) may be the only part of the system that is truly "single-use". In such embodiments, the tank 156 may be refillable with e-liquid or the e-liquid may be stored in a non-consumable component of the system. For example, the e-liquid may be stored in a tank located in the device or stored in another component that is itself not single-use (e.g. a refillable tank).

The tank 156 may be referred to as a "clearomizer" if it includes a window 158, or a "cartomizer" if it does not.

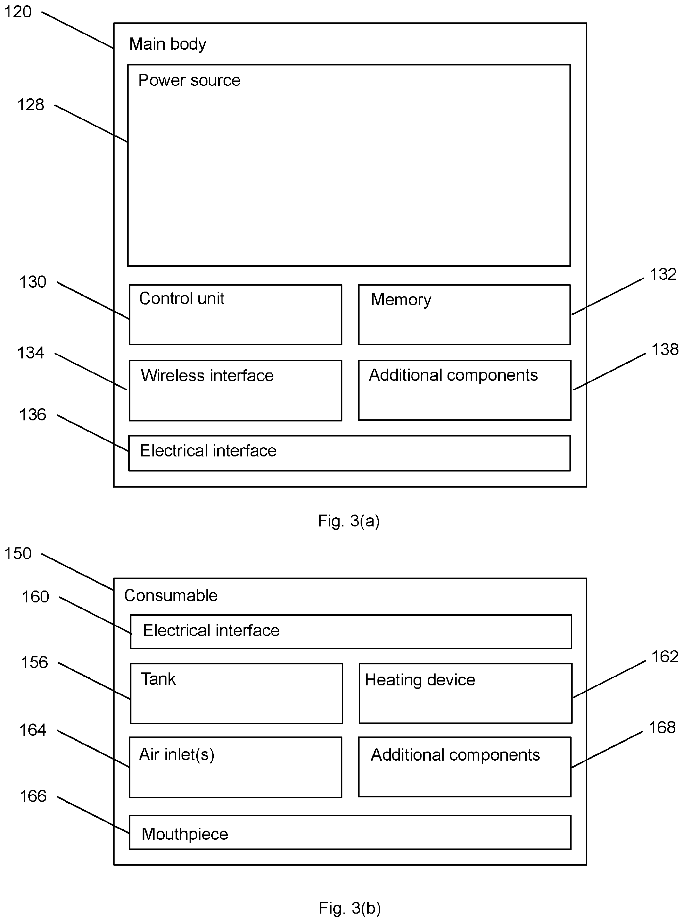

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, an electrical interface 136, and, optionally, one or more additional components 138.

The power source 128 is preferably a battery, more preferably a rechargeable battery.

The control unit 130 may include a microprocessor, for example.

The memory 132 is preferably includes non-volatile memory.

The wireless interface establishes communication over a wireless communication channel between the smoking substitute device and communication terminal of the external device. The wireless interface may utilities any suitable wireless protocol. Suitably, the wireless interface may operate over a short range network. For example, it may comprise a wireless personal area network (WPAN), e.g. using Bluetooth™, ZigBee, a WiFi personal hotspot or the like. The smoking substitute device may pair with the portable communication terminal over the wireless communication channel. The portable communication terminal may be a master device and the smoking substitute device may be a slave device. As such, in exemplary embodiments, the wireless interface 134 is preferably configured to communicate wirelessly with the mobile device 2, e.g. via Bluetooth. To this end, the wireless interface 134 could include a Bluetooth™ antenna. Other wireless communication interfaces, e.g. WiFi, are also possible.

The electrical interface 136 of the main body 120 may include one or more electrical supply contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 of the main body 120 may include a reading device configured to read information associated with the consumable from a machine readable data source included in (e.g. contained in the body of, or attached to) the consumable 150.

In some examples, the reading device (if present) may be configured to read information from the machine readable data source non-wirelessly, e.g. using an electrical connection between the main body 120 and consumable 150.

For example, the reading device (if present) may include a set of one or more electrical communication contacts configured to read information from the machine readable data source via an electrical connection established between the set of one or more electrical communication contacts and the machine readable data source. Conveniently, the set of one or more electrical communication contacts of the reading device may be configured to provide the electrical connection by engaging with a set of one or more electrical communication contacts of the consumable 150, when the main body 120 and the consumable 150 are physically coupled together.

In some examples, the reading device (if present) may be configured to read information from the machine readable data source wirelessly, e.g. via electromagnetic waves or optically. Thus, for example, the machine readable data source included in the consumable 150 could be an RFID tag (in which case the reading device included in the main body 120 may be an RFID reader) or a visual data source such as a barcode (in which case the reading device included in the main body may be an optical reader, e.g. a barcode scanner). Various wireless technologies and protocols may be employed to allow the reading device to wirelessly read information from a machine readable data source included in or attached to the consumable 150, e.g. NFC, Bluetooth, Wi-Fi, as would be appreciated by a skilled person.

The reading device (if present) may be configured to write information associated with the consumable to the machine readable data source (e.g. wirelessly or non-wirelessly, via one of the mechanisms discussed above) in addition to being configured to read information associated with the consumable from the machine readable data source. In this case, the reading device may be referred to as a reading/writing device.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical supply contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include a machine readable data source, which may e.g. be contained in the body of, or attached to the consumable 150. The machine readable data source may store information associated with the consumable. The information associated with the consumable may include information concerning the content of the consumable (e.g. e-liquid type, batch number) and/or a unique identifier, for example.

The machine readable data source may be rewritable, e.g. a rewritable RFID chip, or read only, e.g. a visual data source such as a barcode. As indicated above, the additional components 138 of the main body 120 may include a reading device configured to read information associated with the consumable from the machine readable data source.

For example, the electrical interface 160 of the consumable 150 may include a set of one or more electrical communication contacts, which may allow a reading device of the main body to read information from a machine readable data source of the consumable, e.g. as discussed previously.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS™ smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO™ e-cigarette discussed above.

As another example, an entirely disposable (one use) smoking substitute device could be used as the smoking substitute device 10 of Fig. 1, instead of the smoking substitute device 110.

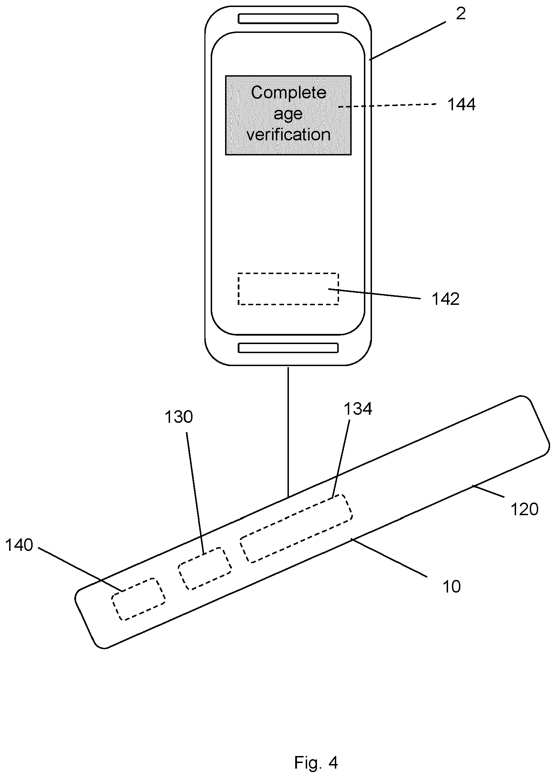

Referring to Figure 4, an exemplary embodiment is shown wherein the system comprises an external device 2 and a smoking substitute device 10. The devices 2, 10 can be as explained above, but specific features relating to the switching between operating modes are herein further described.

The external device 2 is shown as suitably being a smart telephone operating an application. However, it will be appreciated that other devices such as tablet computers, smart watches or the like may be equally applicable. The external device 2 runs the application that can be used as a user interface between the user and the smoking substitute device. In order to establish communication between the external device and smoking substitute device, the smoking substitute device includes a communications interface and the external device is connected thereto. Whilst a wired connection would provide a suitable connection, it is envisaged that a more preferable connection would be a wireless connection as discussed above. Therefore, upon initial set up of the system, it will be appreciated that the application may be used to pair the external device with the smoking substitute device. For instance, the application may complete a Bluetooth pairing operation or another operation to establish the external device as a trusted device. With communication between the devices established, the external device can communicate with the smoking substitute device via the application and the smoking substitute device can communicate with the external device via the application by being controlled to transmit data via a communication interface component.

As shown in Figure 4, the body 120 of the smoking substitute device 10 therefore preferably houses a wireless communication interface such as short distance wireless communication module 134.

The body 120 also houses memory 132 (not shown in figure 4). The memory as described above is arranged to store firmware data that is used by a control unit 130 to perform the operational functions of the smoking substitute device as is known in the art. For instance, the control unit 130 uses the firmware to operate in a first mode or a second mode and to control the communication interface 134 to complete communication steps.

A power source, such as a battery 128 (not shown in figure 4) is also housed in the body 120. The power source is configured to provide power to the various components of the smoking substitute device as is known in the art.

In the exemplary embodiments, the control unit is configured to select an operating mode based on a location of the smoking substitute device. Here, a locator 142 is used to determine the location of the smoking substitute device. For instance using a GPS system or the like as is known in the art. The locator forms part of a locator device having the function of determining which mode the control unit should operate in. That is, whether a function should be enabled or disabled. It will be appreciated that the function of the locator device may be completed by various components of the smoking substitute device or the external device. Thus, the smoking substitute device may comprise the locator. However, it is envisaged a more preferable embodiment is for the smoking substitute device to use the existing location function of the external device. For instance, the external device has a locator 142 that can determine the location of the external device. With the smoking substitute device connected over a short distance wireless link, the location of the external device can be used as an approximate location of the smoking substitute device. In particular, since in the example of the external device being a personal device such as a mobile phone, the user typically carries both on their person. Once the locator 142 establishes the location of the device, the location can either be sent over the wireless link for use by the control unit to complete a lookup function to determine an appropriate mode to operate in, or the external device can complete the lookup function to determine the appropriate mode and to subsequently send a mode command over the wireless link to command the control unit to operate in a specific mode. It is envisaged that completing the lookup function on the external device might be more preferable so that the lookup function can be more readily updated.

As explained, the locator device completes a lookup function wherein suitably a database is queried in order to determine an operating mode authorised or required by the location. That is, the first mode might be assigned to a first location and the second mode might be assigned to a second, different location. By querying the database with the determined location of the smoking substitute device, the locator can determine whether the smoking substitute device should operate in the first mode or the second mode. The lookup function might be controlled by the control unit of the smoking substitute device or by the external device. The first location and second location might be geographically separated as separate countries, or separate states, or specific areas within states. It will be appreciated that there may be a plurality of locations each assigned the first or second mode or a further mode to enable the smoking substitute device to be constrained to operate as required by the rules or regulations or requirements of the location.

In the exemplary embodiments, the smoking substitute device has a first function. Thus the smoking substitute device includes a functional device for completing the first function. For instance, the function may be a function to generate an aerosol, or a function to determine whether a user is above an age limit, or a function to determine to operate with a type of consumable, or a function to record user data, or another function. In the first mode, one function is enabled and in the second mode, that function is disabled. It will be appreciated that there may be further modes where further functions are enabled and disabled and the modes may include combinations of functions, for instance an age limit restriction on a type of consumable.

By way of example, in one embodiment, the first function is an operation of the smoking substitute device to create an aerosol. In the first mode, the function is enabled such that the smoking substitute device operates. In the second mode, the function is disabled such that a user cannot operate the device to create an aerosol. Consequently, for example, if the first location allows an aerosol to be inhaled, but the second location does not, the manufacturer can configure the smoking substitute device to be automatically compliant with the operating conditions in both locations.

According to one example and as shown in Figure 4, the first function is an operation of the smoking substitute device. Here, the smoking substitute device 10 suitably includes a functional device comprising an aerosol assembly component 140. The aerosol assembly component typically includes the components necessary to produce an aerosol. For instance, the aerosol assembly component might include a heating device 162. Suitably, the heating device might be a coil as herein described. In an additional embodiment, the heating device 162 is configured to be actuated by an additional component 168 such as a switch or an airflow sensor. Here, in use the smoking substitute device is configured to supply power to the heating device when the switch is activated or when the airflow sensor senses an inhale. In the exemplary embodiments, the control unit 130 controls the power source 128 to not supply power to the heating device 162 and / or the additional component 168. Consequently, the aerosol assembly component is disabled because the heating device is not provided with power, either directly or through the additional component. Alternatively, the control unit is configured to ignore commands requesting the heating device's activation. With no power provided to the heating device, the smoking substitute device is disabled from being used because no aerosol is produced even if the user attempts to do so by activating the switch for instance or by inhaling.

In another embodiment, the smoking substitute device includes a consumable 150 as herein described. The consumable couples with a coupling portion, for instance a coupling portion of the smoking substitute device's body. Typically, the coupling portion includes an electrical interface 136 for electrically connecting the consumable to the components in the body 120. For instance, as explained above, the electrical interface may be a pair of electrical contact pins. The power source 128 is configured to power the consumable through the electrical interface 136. Here, the smoking substitute device can additionally or alternatively be disabled by controlling the power source to prevent power from being supplied to the electrical interface.

Thus, in an alternative embodiment, wherein the first function is to enable and disable a type of consumable, the smoking substitute device has a functional device that may comprise a reader device to read a detail of the consumable. For instance to read a type of consumable that is connected. Here, the first function may be to enable and disable the compatibility of the smoking substitute device with a first type of consumable. For instance, the reader device reads the consumable and determines the consumable as a first type. In the first mode, the operation of the smoking substitute device to create and aerosol (as described above) is enabled. Whereas in the second mode, the operation is disabled for the first type of consumable. It will be appreciated that in a more preferable embodiment, the reader device identifies the consumable as either a first type of consumable or a second type of consumable and the smoking substitute device is operable with the first type of consumable in both modes but the operation with the second type of consumable is enabled and disabled in the first mode and the second mode respectively. Furthermore, there may be third and further types of consumable, and there may be third and subsequent modes of operation wherein each mode enables and disables operation for a different set of types of consumables.

In a further exemplary embodiment, the first function is an age verification process. Here, the application running on the external device may provide a functional device comprising a user input 144 to determine a user age. For instance, the user completes an age verification process and in the first mode, operation of the smoking substitute device is enabled. Whereas in the second mode, operation of the smoking substitute device is disabled if the user is not determined to be above a minimum operating age. It will be appreciated that the operation of the smoking substitute device may have a first minimum age of operation in both the first and second mode wherein the operation of the smoking substitute device is disabled in both modes unless it is determined that the user is above the first minimum age. Here, the age verification process includes a second minimum age limit, older than the first and in the first mode, operation is enabled if the user is determined to be at least above the first minimum age limit, and in the second mode, operation is disabled unless the user is verified as being older than both the first and second age limits. It will be appreciated that there may be third and subsequent minimum age limits and associated third and subsequent operating modes assigned to prevent use by users below that age limit. Thus if locations have different age limits for operation or, for instance, operation with specific types of consumables, the manufacturer can configure the smoking substitute device to automatically comply with the rules, or regulations, or requirements as the smoking substitute is moved between locations.

Although not depicted in Figure 4, the body 120 also houses memory 132. The memory as described above is arranged to store firmware data that is used by a control unit 130 to perform the operational functions of the smoking substitute device as is known in the art. For instance, the control unit uses the firmware to control the communication unit to complete communication steps. The memory may also be configured to store user data. User data is typically stored as non-volatile memory and is generated during operation of the smoking substitute device. For instance, the user data may be logs of operational details such as the time at which an inhale began, the duration or pressure or flow rate of an inhale, battery characteristics such as charge status or connection status, temperature details, error events, or the like. Where a consumable is inserted, the user data may include details such as time and number of consumables inserted, coil temperature and resistance details, and where supported, details of the type or other data of the consumable. It will be appreciated that to record the one or more desired user data, further hardware of the smoking substitute device may be required and / or further additional components as described above or otherwise known in the art. Here, the first function may be a function of recording user data and the smoking substitute device therefore comprises a functional device comprising the function of monitoring and storing user data in the memory. Thus in the first mode, storing user data is enabled, whereas in the second mode storing user data is disabled. It will be appreciated that the function could alternatively be storing specific types of user data or the like and there may be third and subsequent modes enabling and disabling the storage of different types of user data or the like.

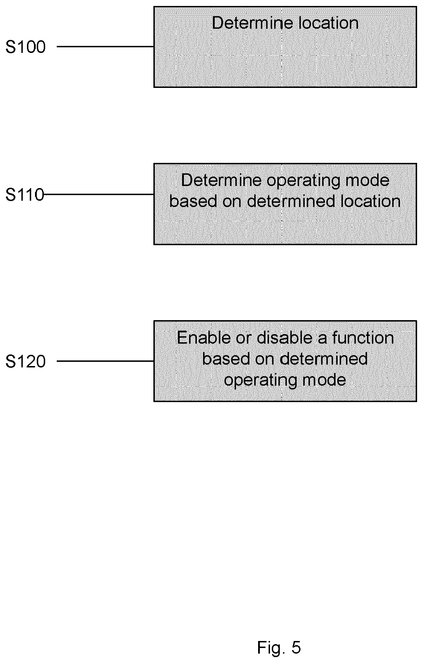

According to the above exemplary embodiments and as shown in Figure 5, a user manages the smoking substitute device by determining a location of the smoking substitute device at step S100 and using the location to determine an operating mode at step S110. For instance, the connected external device determines the location of the device and by approximation the smoking substitute device. A lookup function is then completed to determine whether a first mode or a second mode (or indeed a third or subsequent mode) is assigned to the location. The external device subsequently issues a mode command over the wireless link to indicate to the control unit to control the smoking substitute device in either the respective first mode or second mode. Here, and at step S130, the smoking substitute device is configured to enable and disable the first function respectively. Thus, a user may be constrained to use the smoking substitute device with a function automatically disabled in one location, but to use the same smoking substitute device in a different location with the function enables. Thus a manufacture can supply a smoking substitute device that is configured to be operable differently in accordance to the rules or regulations of different locations without the need to provide different smoking substitute devices specifically adapted for use in different locations or to allow a user to operate a smoking substitute device against the rules or regulations of a second location whilst being able to enjoy the functionality in the first location

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A smoking substitute device operable in a first mode and a second mode, wherein; in the first mode the smoking substitute device is operable with a first function enabled; and in the second mode the smoking substitute device is operable with the first function disabled; the smoking substitute device including:
a control unit to enable and disable said first function when switching operation between the first mode and the second mode respectively; and
a locator device to determine a location of the smoking substitute device; wherein
the control unit is configured to operate in the first mode when the locator determines the smoking substitute device is located in a first region and to operate in the second mode when the locator determines the smoking substitute device is located in a second, different region

2. The smoking substitute device of Claim 1, wherein;
the smoking substitute device includes an aerosol assembly for producing an aerosol; the first function comprises an operating function of the aerosol assembly;
in the first mode, the operating function of the aerosol assembly is enabled so that when a user initiates a puff operation, the aerosol assembly produces an aerosol; and
in the second mode, the operating function of the aerosol assembly is disabled so that when a user initiates a puff operation, the aerosol assembly is prevented from producing an aerosol.

3. The smoking substitute device of Claim 2, wherein the smoking substitute device includes;
a body having a coupling portion arranged to receive a first type of consumable and a second type of consumable;
a reading device configured to read the consumable and determine whether a consumable coupled to the coupling portion is a first type or a second type; and
the operating function of the aerosol assembly is an operating function when it is determined that a second type of consumable is coupled to the coupling portion such that in the first mode, the aerosol assembly is enabled when a second type of consumable is connected and a user initiates a puff operation and in the second mode the aerosol assembly is disabled when a second type of consumable is connected and a user initiates a puff operation.

4. The smoking substitute device of Claim 2, wherein;
the control unit is configured to determine an age verification process of the user and to determine whether a user is above a first age or above a second age that is older than the first age;
the operating function of the aerosol assembly is not enabled in either mode if the control unit determines the user is not above the first age;
the operating function of the aerosol assembly is enabled in the first mode if the control unit determines the user is above the first age;
the operating function of the aerosol assembly is disabled in the second mode if the control unit determines the user is not also above the second age.

5. The smoking substitute device of Claim 2, wherein the aerosol assembly includes a heating unit and the control unit disables the aerosol assembly by preventing power from being provided to the heating unit.

6. The smoking substitute device of Claim 2, wherein the aerosol assembly component includes a heating unit and an additional component to activate the heating unit and the control unit disables the aerosol assembly component by preventing power from being provided to the additional component.

7. The smoking substitute device of Claim 6, wherein the additional component is a switch.

8. The smoking substitute device of Claim 6, wherein the additional component is an airflow sensor.

9. The smoking substitute device of Claim 3, wherein the coupling portion includes an electrical interface for electrically connecting the consumable, wherein the control unit disables the aerosol assembly by preventing power from being provided to the electrical interface.

10. The smoking substitute device of Claim 1, wherein the smoking substitute device includes a memory and the memory is configured to store user data that is generated during operation of the smoking substitute device, and the first function is the storing of user data such that in the first mode user data is stored in the memory and in the second mode user data is not stored in the memory.

11. The smoking substitute device of Claim 1 wherein the smoking substitute device is operable in further modes and in each further mode a further function or combination of functions are enabled and disabled between modes.

12. A system including the smoking substitute device of Claim 1 and an external device,
wherein the smoking substitute device includes a wireless communication interface for connecting to the external device and the locator device comprises determining the location of the smoking substitute device as the location of the external device.

13. A method of managing a smoking substitute device comprising the steps of:
determining a location of the smoking substitute device;
determining whether a first operating mode or a second operating mode is associated with the location; and
controlling the smoking substitute device to operate in the first mode or the second mode based on the determined operating mode wherein in the first mode a first function is enabled and in the second mode the first function is disabled.

14. A method of managing a system comprising a smoking substitute device and an external device comprising the steps of claim 13, wherein the step of determining a location of the smoking substitute device comprises using a locator of the external device to determine the location of the external device and to use the location of the external device as the location of the smoking substitute device.

15. A computer implemented method for controlling a smoking substitute device to execute the method of claim 13 or claim 14 or a computer-readable medium containing computer-readable instructions which, when executed by a processor, cause the processor to perform the method of claim 13 or claim 14.
